(19)

Europäisches
Patentamt

European
Patent Office

Office européen
des brevets

(11) **EP 4 467 575 A1**

(12) **EUROPEAN PATENT APPLICATION**

(43) Date of publication:
**27.11.2024 Bulletin 2024/48**

(21) Application number: **23175771.7**

(22) Date of filing: **26.05.2023**

(51) International Patent Classification (IPC):
**C08F 2/01** (2006.01)     **C08F 2/02** (2006.01)
**C08F 10/02** (2006.01)

(52) Cooperative Patent Classification (CPC):
(C-Sets available)
**C08F 2/02; C08F 2/01;** C08F 110/02; C08F 2400/04
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Polyolefine GmbH
50389 Wesseling (DE)**

(72) Inventors:
- **MANNEBACH, Gerd
56294 Münstermaifeld (DE)**
- **FINETTE, Andre
50997 Köln (DE)**
- **JUSTUS, Christof
33758 Schloß Holte-Stikenbrock (DE)**
- **MOHRBUTTER, Jürgen
53347 Alfter (DE)**

(74) Representative: **LyondellBasell
c/o Basell Polyolefine GmbH
Industriepark Hoechst, Bldg. E413
65926 Frankfurt am Main (DE)**

(54) **HIGH PRESSURE POLYMERIZATION OF ETHYLENE**

(57) The disclosure relates to a process for the production of ethylene homopolymers or copolymers, as well as ethylene homopolymers or copolymers. The process is performed in a tubular reactor, the reactor having a volume to surface ratio of more than 0.016, which gives an ethylene homopolymer or ethylene copolymer product with improved optical and mechanical properties, namely when the process is performed under specific process conditions.

**EP 4 467 575 A1**

(52) Cooperative Patent Classification (CPC): (Cont.)

C-Sets
**C08F 10/02, C08F 2/00;**
**C08F 110/02, C08F 2/01;**
**C08F 110/02, C08F 2/02;**
**C08F 110/02, C08F 2/38;**
**C08F 110/02, C08F 4/34;**
C08F 110/02, C08F 2400/04;
C08F 110/02, C08F 2500/12, C08F 2500/26,
C08F 2500/31

**Description**

The present disclosure relates to a process for the production of ethylene homopolymers or copolymers, as well as ethylene homopolymers or copolymers.

BACKGROUND OF THE DISCLOSURE

Polyethylene is the most widely used commercial polymer. It can be prepared by a couple of different processes. Polymerization in the presence of free-radical initiators at elevated pressures was the method first discovered to obtain polyethylene and continues to be a valued process with high commercial relevance for the preparation of low density polyethylene (LDPE).

A common set-up of a plant for preparing low density polyethylene comprises, beside a polymerization reactor, further equipment. The reaction components are usually pressurized by a combination of two compressors, a primary compressor and a secondary compressor. At the end of the polymerization sequence, a high-pressure polymerization unit normally further includes apparatuses like extruders and granulators for pelletizing the obtained polymer. Furthermore, such a polymerization unit generally also comprises means for feeding monomers and comonomers, free-radical initiators, chain transfer agents or other substances at one or more positions to the polymerization reaction.

A characteristic of the radically initiated polymerization of ethylenically unsaturated monomers under high pressure is that the conversion of the monomers is by far not complete. Per pass of the tubular reactor or the reactor combination, only about 10% to 50% of the dosed monomers are converted. The obtained reaction mixture usually leaves the reactor through a pressure control valve, often designated as let-down valve, and is then commonly separated into polymeric and gaseous components with the unreacted monomers being recycled. To avoid unnecessary decompression and compression steps, the separation into polymeric and gaseous components is usually carried out in two stages. The monomer-polymer mixture leaving the reactor is transferred to a first separating vessel, frequently called high-pressure product separator, in which the separation in polymeric and gaseous components is carried out at a pressure that allows recycling the ethylene and comonomers separated from the monomer-polymer mixture to the reaction mixture at a position between the primary compressor and the secondary compressor. At the conditions of operating the first separation vessel, the polymeric components within the separating vessel are in liquid state. The liquid phase obtained in the first separating vessel is transferred to a second separation vessel, frequently called low-pressure product separator, in which a further separation in polymeric and gaseous components takes place at lower pressure. The ethylene and comonomers separated from the mixture in the second separation vessel are fed to the primary compressor where they are compressed to the pressure of the fresh ethylene feed, combined with the fresh ethylene feed and the joined streams are further pressurized to the pressure of the high-pressure gas recycle stream.

Furthermore, various applications of low density polyethylenes such as applications based on blown films require a good balance of optical and mechanical properties.

WO 2012/044504 A1 discloses a high-pressure polymerization process for producing low density polyethylene in an autoclave or autoclave/tubular reactor. The prepared film has improved optical properties.

WO 2019/034718 A1 discloses a process for the preparation of ethylene homopolymers or copolymers in a facility, the facility comprising a high-pressure tubular reactor and a preheater. According to the examples, the use of a preheater of a larger cross-section, or two preheater units operating in parallel, improves the optical properties of the product.

EP 3121199 A1 teaches a process for polymerizing or copolymerizing ethylenically unsaturated monomers in the presence of free-radical polymerization initiators. The examples report the production of low density polyethylenes having a haze value of 6.5 %, at a gloss value (60°) of 97.

WO 2020/127079 A1 teaches a process for polymerizing ethylene in a high-pressure polymerization system comprising a continuously operated polymerization reactor and a reactor blow down system.

There is a need in the art for processes for the production of ethylene homopolymers and copolymers that are improved in terms of their optical as well as mechanical properties. Hence, there is a need to overcome the disadvantages of the prior art and to provide a process which makes it possible to polymerize or copolymerize ethylenically unsaturated monomers in a tubular reactor with an acceptable conversion of monomers to polymer per pass of the reactor. Furthermore, the process should allow preparing the low density polyethylenes without detrimental effects on the operability in article forming processes or on properties of the produced low density polyethylenes.

SUMMARY OF THE DISCLOSURE

According to a first aspect of the present disclosure, the stated objects are achieved by a process for the preparation of ethylene homopolymers or copolymers in a facility, the facility comprising a high-pressure tubular reactor used in a continuous flow mode with a reaction fluid comprising or consisting of ethylene being introduced into the reactor at a reactor inlet and polymer leaving the reactor at a reactor outlet and the facility further comprising a preheater having an inlet and an outlet,

wherein the process comprises the following steps:

a) compressing the reaction fluid to an elevated pressure;

b) heating at least a portion of the reaction fluid in the preheater;

c) introducing the reaction fluid heated in step b) into the reactor at the reactor inlet; and

d) polymerizing the reaction fluid at temperatures from 100°C to 350°C and pressures in the range from 180 MPa to 340 MPa in the presence of free-radical polymerization initiators in the reactor,

wherein

- the tubular reactor has a volume V [in $m^3$] and an inner surface area A [in $m^2$], and the ratio V/A is higher than 0.016,

- the reactor is run at a monomer conversion in a range of from 22 to 31 %.

It has surprisingly been found that an ethylene homopolymer or ethylene copolymer production process in a tubular reactor, the reactor having a volume to surface ratio of more than 0.016, gives an ethylene homopolymer or ethylene copolymer product with improved optical and mechanical properties, namely when the process is performed under specific process conditions. By selecting a particular volume to surface ratio and a specific conversion, the optical properties of the product such as haze, gloss, and clarity, and the mechanical properties such as DDI and MFR are improved.

In some embodiments, the reactor has a volume to surface ratio in a range of from 0.016 to 0.025, preferably from 0.019 to 0.022.

In some embodiments, the conversion rate is in a range of from 23 to 29, preferably in a range of from 24 to 28, in particular in a range of from 25 to 27.5, such as in a range of from 25.5 to 27, or in a range of from 26 to 27.

In some embodiments, the tubular reactor has an inner diameter $d_i$ of from 65 to 120 mm, preferably from 70 mm to 110 mm.

In some embodiments, the tubular reactor is composed of tubes of a length of from 5 m to 25 m.

In some embodiments, the design pressure $p_{des}$ of the tubular reactor is from 240 MPa to 400 MPa.

In some embodiments, the feed rate of the reaction gas composition to the tubular reactor is from 80 t/h to 210 t/h.

In some embodiments, step b) comprises addition of one or more chain-transfer agents. Preferably, the chain transfer agent is selected from hydrogen, aliphatic and olefinic hydrocarbons, ketones, aldehydes and saturated aliphatic alcohols. More preferably, the chain-transfer agent is a saturated aliphatic aldehyde, 1-olefins or aliphatic hydrocarbons.

In some embodiments, the amount of added aldehydes and ketones is in a range of from 0.4 kg/t of prepared polymer to 10 kg/t of prepared polymer.

In some embodiments, propionic aldehyde is used as sole chain transfer agent or the chain transfer agent is a mixture of propionic aldehyde and one or more olefinic hydrocarbons.

In some embodiments, the average velocity of the reaction fluid at the outlet of the preheater is lower than the average velocity of the reaction fluid in the tubular reactor at the reactor inlet and the ratio of the average velocity of the reaction fluid in the tubular reactor at the reactor inlet to the average velocity of the reaction fluid in the preheater at the outlet of the preheater is in the range from 1.5 to 5.

In some embodiments, in step a), the pressure of the reaction fluid after compression ranges from 180 MPa to 320 MPa, and/or, in step c), when introducing the heated reaction fluid into the reactor, the pressure of the reaction fluid ranges from 175 MPa to 315 MPa.

In some embodiments, in step c), when introducing the heated reaction fluid into the reactor, the temperature of the reaction fluid ranges from 130°C to 180°C.

According to a second aspect of the present disclosure, the stated objects are achieved by a low density polyethylene having:

a) a density in a range of from 0.910 to 0.936 g/, determined according to ISO 1183-1 at 23°C;

b) an Mw value in a range of from 70.000 to 100.000, where Mw is the weight average molecular weight, measured by GPC;

c) an Mn value in a range of from 18.000 to 24.000, where Mn is the number average molar mass, measured by GPC;

d) a gloss 20° value [as measured according to ASTM D 2457] of 74 or more;

e) a gloss 60° [as measured according to ASTM D 2457] of 114 or more;

f) a haze value [as measured according to ASTM D 1003] of less than 6;

g) a melt flow rate in a range of from 0.67 to 1.0 g/10, determined according to ISO 1133-1;

h) a dart drop impact strength, F50, in a range of from 130 to 200 g, determined according to ASTM D1709;

i) a clarity in a range of from 97.0 to 99.3.

BRIEF DESCRIPTION OF THE DRAWINGS

To assist those of ordinary skill in the relevant art in making and using the subject matter hereof, reference is made to the appended drawings, wherein:

Figure 1     shows the flow pattern of the polymerization in an LDPE reactor, and

Figure 2     depicts the molecular weight distribution depending on plant size.

DETAILED DESCRIPTION OF THE DISCLOSURE

The present disclosure relates to a process for polymerizing ethylene and optionally one or more comonomers, to obtain an ethylene-based polymer (ethylene homopolymer or copolymer) in a facility, the facility comprising a high-pressure tubular reactor used in a continuous flow mode with a reaction fluid comprising or consisting of ethylene being introduced into the reactor at a reactor inlet and polymer leaving the reactor at a reactor outlet and the facility further comprising a preheater having an inlet and an outlet. In a preferred embodiment of the present disclosure, the monomers are brought to the polymerization pressure by one or more compressors in a sequence of compression stages, the compressed monomers are optionally passed through a pre-heater or a pre-cooler and are then transferred into the polymerization reactor at the reactor inlet. In addition, a reaction mixture obtained by the polymerization leaves the reactor at the reactor outlet through a pressure control valve and is optionally cooled by a post reactor cooler. Subsequently, the reaction mixture is separated into polymeric and gaseous components in two or more stages, where the gaseous components separated off in a first stage at an absolute pressure of from 15 MPa to 50 MPa are recycled to the one or more compressors via a high-pressure gas recycle line and the gaseous components separated off in a second stage at an absolute pressure in the range of from 0.1 MPa to 0.5 MPa are recycled to the first stage of the sequence of compression stages via a low-pressure gas recycle line, and the polymeric components obtained by the polymerization are transformed into pellets.

The polymerization is preferably a homopolymerization of ethylene or a copolymerization of ethylene with one or more other monomers, provided that these monomers are free-radically copolymerizable with ethylene under high pressure. Examples of copolymerizable monomers for use in the present technology are $\alpha,\beta$-unsaturated Cs-Ca-carboxylic acids, derivatives of $\alpha,\beta$-unsaturated $C_3$-$C_8$-carboxylic acids, e.g. unsaturated $C_3$-$C_{15}$-carboxylic esters or anhydrides, and 1-olefins. In addition, vinyl carboxylates, such as vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer.

In the case of copolymerization, the proportion of comonomer or comonomers in the reaction mixture is from 1 to 50% by weight, preferably from 3 to 40% by weight, based on the amount of monomers, i.e. the sum of ethylene and other monomers. Depending on the type of comonomer, it can be preferred to feed the comonomers at more than one point to the reactor set-up. Preferably the comonomers are fed to the suction side of the secondary compressor.

For the purposes of the present disclosure, polymers or polymeric materials are substances which are made up of at least ten monomer units. The polymers or polymeric materials are preferably low density polyethylenes having an average molecular weight $M_n$ of more than 20 000 g/mole. The term "low density polyethylene" (LDPE) includes ethylene homopolymers and ethylene copolymers. The process of the present disclosure can also be employed in the preparation of oligomers, waxes and polymers having a molecular weight Mn of less than 20 000 g/mole.

In the polymerization, the molecular weight of the polymers to be prepared can as usual be altered by the addition of modifiers which act as chain-transfer agents. Examples of modifiers for use in the present technology are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde or 1-olefins such as propene, 1-butene or 1-hexene, or aliphatic hydrocarbons such as propane.

The high polymerization is preferably carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are preferably in the range of from 100°C to 350°C, and more preferably in the range of from 180°C to 340°C and particularly preferred from 200°C to 330°C for polymerization in a tubular reactor and more preferably in the range of from 110°C to 320°C and particularly preferred from 120°C to 310°C for polymerization in an autoclave reactor.

The polymerization can be carried out with all types of high-pressure reactors appropriate for high-pressure polymerization. High-pressure reactors for use in the present technology are, for example, tubular reactors or autoclave reactors. Preferably the polymerization is carried out in one or more tubular reactors or one or more autoclave reactors or combinations of such reactors. In particularly preferred embodiments of the present disclosure, the polymerization reactor is a tubular reactor.

Common high-pressure autoclave reactors are stirred reactors and have a length-to- diameter ratio in a range from 2 to 30, preferably from 2 to 20. Such autoclave reactors have one or more reaction zones, preferably from 1 to 6 reaction zones and more preferably from 1 to 4 reaction zones. The number of reaction zones depends on the number of agitator baffles which separate individual mixed zones within the autoclave reactor. In facilities in which the polymerization or the first polymerization is carried out in an autoclave reactor, i.e. in a facility in which the only polymerization reactor is an autoclave reactor or high-pressure polymerization system in which the first reactor of a reactor cascade is an autoclave reactor, the reaction mixture coming from the compressors is usually first passed through a pre-cooler before entering the autoclave reactor.

Appropriate tubular reactors are basically long, thick-walled pipes, which are usually from about 0.5 km to 4 km, preferably from 1 km to 3 km and especially from 1.5 km to 2.5 km long. Such tubular reactors have preferably a length-to-diameter ratio of greater than 1000:1, preferably from 10000:1 to 40000:1 and especially from 25000:1 to 35000:1.

Preferred tubular reactors have at least two reaction zones, preferably from 2 to 6 reaction zones and more preferably from 2 to 5 reaction zones. The number of reaction zones is given by the number of feeding points for the initiator. Such a feeding point can, for example, be an injection point for a solution of azo compounds or organic peroxides. Fresh initiator is added to the reactor, where the initiator decomposes into free radicals and initiates further polymerization. The generated heat of the reaction raises the temperature of the reaction mixture, since more heat is generated than can be removed through the walls of the tubular reactor. The rising temperature increases the rate of decomposition of the free-radical initiators and accelerates polymerization until essentially all of the free-radical initiator is consumed. Thereafter, no further heat is generated and the temperature decreases again since the temperature of the reactor walls is lower than that of the reaction mixture. Accordingly, the part of the tubular reactor downstream of an initiator feeding point in which the temperature rises is the reaction zone, while the part thereafter, in which the temperature decreases again, is predominantly a cooling zone. The amount and nature of added free-radical initiators determines how much the temperature rises and accordingly allows for adjusting that value. The temperature rise may be set to be in the range of from 70°C to 170°C in the first reaction zone and 50°C to 130°C for the subsequent reaction zones depending on the product specifications and the reactor configuration. Preferably, the tubular reactor is equipped with cooling jackets for removing the heat of the reaction. More preferably, all reaction zones of the tubular reactor are cooled by cooling jackets.

The compression of the reaction gas composition to the polymerization pressure is carried out by one or more compressors in a sequence of compression stages, where preferably a primary compressor first compresses the reaction gas composition to a pressure of from 10 MPa to 50 MPa and a secondary compressor further compresses the reaction gas composition to the polymerization pressure of from 110 MPa to 500 MPa. Preferably the primary compressor and the secondary compressor are multistage compressors. It is further possible to separate one or more stages of one or both of these compressors and divide the stages into separated compressors. However, usually a series of one primary compressor and one secondary compressor is used for compressing the reaction gas composition to the polymerization pressure. In such cases, sometimes the whole primary compressor is designated as primary compressor. However, it is also common to designate the one or more first stages of the primary compressor, which compress the recycle gas from the low- pressure product separator to the pressure of the fresh ethylene feed, as the booster compressor and then only the one or more subsequent stages as the primary compressor, although the booster compressor and the subsequent stages are all part of one apparatus.

In a preferred embodiment of the present disclosure, the facility comprises a pre-heater upstream of a tubular reactor for heating the reaction gas composition to a temperature capable of initiating the polymerization. In a preferred embodiment of the present disclosure the entire reaction gas composition provided by the secondary compressor is fed via a pre-heater to the inlet of the tubular reactor. In another preferred embodiment of the present disclosure only a part of the reaction gas composition compressed by the secondary compressor is fed via the pre-heater to the inlet of the tubular reactor and the remainder of the reaction gas composition compressed by the secondary compressor is fed as one or more side streams to the tubular reactor downstream of the inlet of the tubular reactor. In such a set-up preferably from 30 to 90% by weight, more preferably from 40 to 70% by weight of the reaction gas composition provided by the secondary compressor are fed to the inlet of the tubular reactor and from 10 to 70% by weight, more preferably from 30 to 60% by weight of the reaction gas composition provided by the secondary compressor are fed as one or more side streams to the tubular reactor downstream of the inlet of the tubular reactor.

The facility for carrying out the polymerization of the present disclosure preferably comprises, besides the polymerization reactor and the rector blow down system, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high-pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called low-pressure product separator, and further separated, at reduced pressure, usually at an absolute pressure in the range of from 0.1 MPa to 0.5 MPa, in polymeric and gaseous components. The gaseous fraction withdrawn from the second separation vessel is fed via a so-called low-pressure gas recycle line to the primary compressor, preferably to the foremost of the stages. Also the low-pressure gas recycle line usually comprises several purification steps for purifying the gas from undesired components. The facility can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

Preferably, the recycled gas coming from the low-pressure gas recycle line is compressed by the first stages of the primary compressor to the pressure of the fresh feed of ethylenically unsaturated monomers, preferably ethylene, and thereafter combined with the fresh gas feed and the combined gases are further compressed in the primary compressor to the pressure of from 10 MPa to 50 MPa. Preferably the primary compressor comprises five or six compression stages, two or three before adding the fresh gas and two or three after adding the fresh gas. The secondary compressor has preferably two stages; a first stage, which compresses the gas to a pressure in the range from 50 MPa to 150 MPa, and a second stage, which further compresses the gas to the final polymerization pressure.

The pressure within the polymerization reactor is preferably controlled by a pressure control valve, which is arranged at the outlet of the polymerization reactor and through which the reaction mixture leaves the reactor. The pressure control valve can be any valve arrangement which is adapted to reducing the pressure of the reaction mixture leaving the reactor to the pressure within the first separation vessel.

Preferred polymerization reactors are located in a chamber having a surrounding protective wall.

The polymeric components obtained by the polymerization are finally transformed into pellets, normally by apparatuses like extruders or granulators. Preferably, the ethylene-based polymer produced by the process is a LDPE having a density in the range from 0.910 $g/cm^3$ to 0.936 $g/cm^3$.

Preferably, the tubular reactor is composed of individual segments. These segments or tubings are preferably flanged together. The tubings can be straight tubes or the tubings can be bends. Preferably, the straight tubes have a length of from 15 m to 20 m. The tubes can be flanged to other tubes, or the tubes can be flanged to a bend. Preferred bends are 180° bend bends, i.e. bends which are shaped in a semicircle. It is also possible that the bends are formed in a way that more than one bend flanged together, for example two bends flanged together, form a semicircle. The bends have preferably a small radius; i.e. preferably the centerline radius of the bends is not more than the tenfold of the average inside diameter of the bends, more preferably the centerline radius of the bends is not more than the eightfold of the average inside diameter of the bends, and in particular the centerline radius of the bends is not more than the fivefold of the average inside diameter of the bends.

In a preferred embodiment of the present disclosure, the flanges are arranged such that groups of flanges are aligned on top of each other. Preferably such a group of flanges is arranged one atop of the other and has at least two flanges, more preferably from 3 to 100 flanges, and most preferably from 5 to 60 flanges.

In a preferred embodiment of the present disclosure, the cooling jackets are arranged on straight tubes. Preferably, each of the straight tubes is equipped with a cooling jacket. Preferably, water is used as a cooling medium. In a preferred embodiment, not each of the straight tubes is supplied individually with the cooling medium but some adjacent straight tubes form a group, for example a group of two, three, four, five or six straight tubes, and this group of straight tubes is supplied with the cooling medium. The cooling medium is then conveyed to the cooling jacket of one of the straight tubes of the group and thereafter passed through the cooling jackets of the other members of the group of straight tubes before being taken away from the tubular reactor.

In the process of the present disclosure, the facility comprises a preheater upstream of the tubular reactor for heating the reaction fluid to a temperature capable of initiating the polymerization, the preheater having an inlet into which the reaction fluid is introduced for being heated and an outlet through which the heated reaction fluid leaves the preheater. Preferably, the preheater is a long, thick-walled pipe having an inner diameter from 30 mm to 140 mm and preferably from 60 mm to 120 mm. The preheater is preferably composed of individual segments. These segments or tubings are preferably flanged together. The preheating tubings can be straight tubes or the tubings can be bends. Preferably, the straight tubes have a length of from 15 m to 20 m. The tubes can be flanged to other tubes, or the tubes can be flanged to a bend. Preferred bends are 180° bend bends, i.e. bends which are shaped in a semicircle. It is also possible that the bends are formed in a way that more than one bend is flanged together, for example two bends flanged together, to form a semicircle. The bends have preferably a small radius; i.e. preferably the centerline radius of the bends is not more than the tenfold of the average inside diameter of the bends, more preferably the centerline radius of the bends is not more than the eightfold of the average inside diameter of the bends, and in particular the centerline radius of the bends is not more than the fivefold of the average inside diameter of the bends. In preferred embodiment of the present disclosure, the flanges are arranged such that groups of flanges are aligned on top of each other. Preferably such a group of flanges is arranged one atop of the other and has at least two flanges, more preferably from 3 to 50 flanges, and most preferably from 5 to 30 flanges.

In a preferred embodiment of the present disclosure, the entire reaction fluid provided by the secondary compressor is fed via the preheater to the inlet of the tubular reactor. In another preferred embodiment of the present disclosure only a part of the reaction fluid compressed by the secondary compressor is fed via the preheater to the inlet of the tubular reactor and the remainder of the reaction fluid compressed by the secondary compressor is fed as one or more side streams to the tubular reactor downstream of the inlet of the tubular reactor. In such a set-up, preferably from 30 to 90% by weight, more preferably from 40 to 70% by weight of the reaction fluid provided by the secondary compressor are fed to the inlet of the tubular reactor and from 10 to 70% by weight, more preferably from 30 to 60% by weight of the reaction fluid provided by the secondary compressor are fed as one or more side streams to the tubular reactor downstream of the inlet of the tubular reactor.

The facility for carrying out the polymerization of the present disclosure comprises, beside the polymerization reactor, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high-pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called a low-pressure product separator, and further separated, at reduced pressure, usually at an absolute pressure in the range of from 0.1 MPa to 0.5 MPa, in polymeric and gaseous components. The gaseous fraction withdrawn from the second separation vessel is fed via a so-called low-pressure gas recycle line to the primary compressor, preferably to the foremost of the stages. Also, the low-pressure gas recycle line usually comprises several purification steps for purifying the gas from undesired components. The facility can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

In a preferred embodiment of the present disclosure, the facility comprises a post reactor cooler downstream of the polymerization reactor for cooling the reaction mixture. The post reactor cooler can be arranged upstream of the pressure control valve or the post reactor cooler can be arranged downstream of the pressure control valve. Preferably, the post reactor cooler is arranged downstream of the pressure control valve. Preferably, the post reactor cooler is a long, thick-walled pipe having an inner diameter from 30 mm to 120 mm and preferably from 60 mm to 100 mm. The post reactor cooler is preferably composed of individual segments. These segments or cooling tubings are preferably flanged together. The cooling tubings can be straight tubes or the tubings can be bends. Preferably, the straight tubes have a length of from 15 m to 20 m. The tubes can be flanged to other tubes, or the tubes can be flanged to a bend. Preferred bends are 180° bends, i.e. bends which are shaped in a semicircle. It is also possible that the bends are formed in a way that more than one bend flanged together, for example two bends flanged together, form a semicircle. The bends have preferably a small radius; i.e. preferably the centerline radius of the bends is not more than the tenfold of the average inside diameter of the bends, more preferably the centerline radius of the bends is not more than the eightfold of the average inside diameter of the bends, and in particular the centerline radius of the bends is not more than the fivefold of the average inside diameter of the bends. In preferred embodiment of the present disclosure, the flanges are arranged such that groups of flanges are aligned on top of each other. Preferably such a group of flanges is arranged one atop of the other and has at least two flanges, more preferably from 3 to 80 flanges, and most preferably from 5 to 60 flanges.

The process of the present disclosure is preferably a radical polymerization carried out in the presence of free-radical polymerization initiators. Possible initiators for starting the free-radical polymerization in the respective reaction zones are in general all substances that can produce radical species under the conditions in the polymerization reactor, for example, oxygen, air, azo compounds or peroxidic polymerization initiators. In a preferred embodiment of the disclosure the polymerizations is carried out by using oxygen, either fed in the form of pure $O_2$ or as air. In case of initiating the polymerization with oxygen, the initiator is normally first mixed with the ethylene feed and then fed to the reactor. In such a case it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. Examples of suitable organic peroxides are peroxy esters, peroxy ketals, peroxy ketones and peroxycarbonates, e.g. di(2-ethylhexyl) peroxydicarbonate, dicyclohexyl peroxydicarbonate, diacetyl peroxydicarbonate, tert-butyl peroxyisopropylcarbonate, di-sec-butyl peroxydicarbonate, di-tert-butyl peroxide, di-tert-amyl peroxide, dicumyl peroxide, 2,5-dimethyl-2,5-di-tert-butylperoxyhexane, tert-butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethylhexanoylperoxy)hexane, tert-amyl peroxy-2-ethylhexanoate, dibenzoyl peroxide, tert-butyl peroxy-2-ethylhexanoate, tert-butyl peroxydiethylacetate, tert-butyl peroxydiethylisobutyrate, tert-butyl peroxy-3,5,5-trimethyl-hexanoate, 1,1-di(tert-butylperoxy)-3,3,5-trimethylcyclohexane, 1,1-di(tert-butylperoxy)-cyclohexane, tert-butyl peroxyacetate, cumyl peroxyneodecanoate, tert-amyl peroxyneodecanoate, tert-amyl peroxypivalate, tert-butyl peroxyneodecanoate, tert-butyl permaleate, tert-butyl peroxypivalate, tert-butyl peroxyisononanoate, diisopropylbenzene hydroperoxide, cumene hydroperoxide, tert-butyl peroxybenzoate, methyl isobutyl ketone hydroperoxide, 3,6,9-triethyl-3,6,9-trimethyl-triperoxocyclononane and 2,2-di(tert-butylperoxy)-butane. Azoalkanes (diazenes), azodicarboxylic esters, azodicarboxylic dinitriles such as azobisisobutyronitrile and hydrocarbons which decompose into free radicals and are also referred as C-C initiators, e.g. 1,2-diphenyl-1,2-dimethylethane derivatives and 1,1,2,2-tetramethylethane derivatives, are also suitable. It is possible to use either individual initiators or preferably mixtures of various initiators. A large range of initiators, in particular peroxides, are commercially available, for example the products of Akzo Nobel offered under the trade names Trigonox® or Perkadox®.

Suitable peroxidic polymerization initiators include, for example, 1,1-di(tert-butyl-peroxy)cyclohexane, 2,2-di(tert-butylperoxy)butane, tert-butyl peroxy-3,5,5-trimethyl-hexanoate, tert-butyl peroxybenzoate, 2,5-dimethyl-2,5-di(tert-butylperoxy)hexane, tert-butyl cumyl peroxide, di-tert-butyl peroxide and 2,5-dimethyl-2,5-di(tert-butylperoxy)hex-3-yne, and particular preference is given to using tert-butyl peroxy-3,5,5-trimethylhexanoate, di-(2-ethylhexyl) peroxydicarbonate or tert-butyl peroxy-2-ethylhexanoate.

The initiators can be employed individually or as a mixture in concentrations of from 0.1 mol/t to 50 mol/t of polyethylene produced, in particular from 0.2 mol/t to 20 mol/t, in each reaction zone. In a preferred embodiment of the present disclosure the free-radical polymerization initiator, which is fed to a reaction zone, is a mixture of at least two different azo compounds or organic peroxides. If such initiator mixtures are used it is preferred that these are fed to all reaction zones. There is no limit for the number of different initiators in such a mixture, however preferably the mixtures are composed of from two to six and in particular of two, three or four different initiators. Particular preference is given to using mixtures of initiators which have different decomposition temperatures.

In some embodiments, the initiators are in the dissolved state. Examples of solvents are ketones and aliphatic hydrocarbons, in particular octane, decane and isododecane and also other saturated $C_8$-$C_{25}$-hydrocarbons. The solutions comprise the initiators or initiator mixtures in proportions of from 2 to 65% by weight, preferably from 5 to 40% by weight and particularly preferably from 8 to 30% by weight.

In a preferred embodiment of the present disclosure, and as mentioned above, the polymerization is carried out in the presence of a chain transfer agent. Chain transfer agents are chemical compounds that may interact with a growing polymer chain, terminate the further growth of the growing polymer chain and induce the growth of another growing chain. Accordingly, the molecular weight of the polymers to be prepared can be altered by addition of chain transfer agents which are sometimes also called modifiers or regulators. Examples of chain transfer agents are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol or mixtures of these compounds. Particular preference is given to using saturated aliphatic aldehydes, in particular propionaldehyde or olefinic hydrocarbons such as propene, 1-butene or 1-hexene, or aliphatic hydrocarbons such as propane, or mixtures of these compounds. Preferably, the amount of chain transfer agent fed to the tubular reactor is from 0.2 kg/t prepared polymer to 40 kg/t prepared polymer, more preferably 0.4 kg/t prepared polymer to 20 kg/t prepared polymer. In a preferred embodiment a chain transfer agent comprising at least one aldehyde or at least one ketone is employed and the amount of added aldehydes and ketones is from 0.4 kg/t of prepared polymer to 10 kg/t of prepared polymer.

In an especially preferred embodiment of the present disclosure, propionic aldehyde is used as sole chain transfer agent or the chain transfer agent is a mixture of propionic aldehyde and one or more olefinic hydrocarbons.

The polymers obtained by the process according to the present disclosure are adapted for being converted to shaped articles such as films, laminating films or sheets, fibers, cables or wires or molded parts. Appropriate methods for the preparation of the shaped articles include extrusion molding, extrusion coating, blow molding, rotomolding or injection molding. The polymers are especially configured for producing films, e.g. on blown film machines or cast film lines. Such films are characterized in that they can be produced with a good operability and that they have a good balance of optical and mechanical properties. The present disclosure accordingly also covers processes for preparing shaped articles from the obtained polymers and especially processes in which the shaped article is a film.

Conversion rate means polymerized monomer at the end of the reaction based on total starting monomer.

The advantages of the present disclosure become apparent from the following examples wherein percentages are given by weight, unless stated otherwise.

Examples

Density

Density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

Melt Flow Rate

The melt flow rate MFR was determined according to DIN EN ISO 1133:2005, condition D at a temperature of 190°C under a load of 2.16 kg.

Molecular Weight Distribution Determination

The determination of the molar mass distributions and the means Mn, Mw, Mz and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. An Agilent PL-GPC-220 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was $500\,\mu$l and polymer concentration was in the range of 0.01 % < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

Furthermore, Mw was measured by Gel Permeation Chromatography (GPC) coupled with Multi-Angle Laser-Light Scattering (MALLS), which is also referred to as GPC-LS. The radius of gyration for each fraction eluted from the GPC (as described above but with a flow-rate of 0.6 ml/min and a column packed with 30mm particles) is measured by analyzing the light scattering at the different angles with the MALLS (detector Wyatt Dawn HELEOS II, Wyatt Technology, Santa Barbara, Calif.). A laser source of 120mW of wavelength 658nm was used. The specific index of refraction was taken as 0.104 ml/g. Data evaluation was done with Wyatt ASTRA 7.3.1 software. Said measurement allows to determine a long chain branching (LCB) index. The LCB index corresponds to the branching factor g', measured for a molecular weight of 106 g/mol. The branching factor g' allows determining long-chain branches at high Mw. The LCB Index is determined as described in the following.

The parameter g' is the ratio of the measured mean square radius of gyration to that of a linear polymer having the same molecular weight. Linear molecules show a g' value of 1, while values less than 1 indicate the presence of LCB.

Values of g' as a function of mol. weight, M, were calculated from the equation:

$$g'(M) = \frac{< Rg^2 >_{sample,M}}{< Rg^2 >_{linear\ ref.,M}}$$

where $<Rg^2>_{,M}$ is the root-mean-square radius of gyration for the fraction of mol. weight M.

The radius of gyration for each fraction eluted from the GPC (as described above but with a flow-rate of 0.6 ml/min and a column packed with 30mm particles) is measured by analyzing the light scattering at the different angles.

Therefore, from this MALLS setup it is possible to determine mol. weight M and $<Rg^2>_{sample,M}$ and to define a g' at a measured M = 106 g/mol. The $<Rg^2>_{linear\ ref.,M}$ is calculated by the established relation between radius-of-gyration and molecular weight for a linear polymer in solution (Zimm and Stockmayer WH 1949)) and confirmed by measuring a linear PE reference with the same apparatus and methodology described.

The same protocol is described in the following documents.

Zimm BH, Stockmayer WH "The dimensions of chain molecules containing branches and rings." J Chem Physics 17, and Rubinstein M., Colby RH. (2003), Polymer Physics, Oxford University Press.

### Haze

The term "haze" as used herein refers to the percentage of transmitted light in passing through the polymer derivates from the incident beam by forward scattering. The effect of haze is to impart a cloudy or milky appearance to the sample. Haze was determined according to ASTM D 1003-00 using 50 $\mu$m thickness blown film extruded at a melt temperature of 180°C and a blow-up ratio of 2.5:1. In general, this test method covers the evaluation of specific light-transmitting and wide-angle-light-scattering properties of planar sections of materials such as essentially transparent plastic. Light that is scattered upon passing through a film or sheet of a material can produce a hazy or smoky field when objects are viewed through the material. In particular, "Haze" is an average of the percentage of light that deviates from the incident beam by more than 2.5°.

### Clarity

"Clarity" is a measurement of narrow angle scattering and is a standardized characterization of the translucence or "see-through" property of an optically transmissive component. It is a standard measurement on BYK Haze-gard I equipment (available from BYK-Gardner GmbH) as an added measurement to the ASTM D1003 test method configuration established for the haze.

### Gloss

Gloss was determined at 60° according to ASTM D 2457-03 using 50 $\mu$m thickness blown film extruded at a melt temperature of 180°C and a blow-up ratio of 2.5:1.

### Conversion rate

The conversion rate corresponds to the hourly production rate [t/h] divided by the hyper compressor throughput [t/h] times 100 %.

TABLE 1. Reactor sizes used in the experiments

| | Tube diameter D, [mm] | Reactor length L, [m] | Volume V, [m3] | Surface area A, [m2] | V/A |
|---|---|---|---|---|---|
| Reactor 1 | 40 | 934 | 1.1731 | 117.3104 | 0.010 |
| Reactor 2 | 76 | 2210 | 10.0256 | 527.6710 | 0.019 |

Example 1 (reactor 2 with low conversion rate)

A LDPE film grade was produced by continuous polymerization of ethylene as ethylenically unsaturated monomer in a high-pressure tubular reactor. The reactor had in total a length of 2210 m and a design pressure of 300 MPa. The tubular reactor was composed of reactor tubes having a length of 13 m with an outer diameter $d_o$ of 180 mm and an inner diameter $d_i$ of 76 mm. The resulting volume to surface ratio V/A is 0.0190.

Propionic aldehyde was added as chain transfer agent to the fresh ethylene stream entering the primary compressor in an amount of 1.4 kg per t of produced polyethylene. The secondary compressor was operated with a throughput of 117 t reaction gas composition per hour. The compressed reaction gas composition was heated to 155°C in a pre-heater, and fed to the inlet of the tubular reactor having a pressure of 280 MPa. For removing the generated heat of polymerization, cooling water was circulated through cooling the jackets attached to the outer surface of the reactor tubes. The reaction mixture discharged from the tubular reactor was passed through a post reactor cooler and separated from volatiles in two steps via a first separation vessel and a second separation vessel. The degassed liquid polymer was conveyed to an extruder and granulator to form LDPE pellets. Within a period of 24 hours of continuous production, 31.2 t/h of LDPE were obtained having the properties summarized in Table 2. Accordingly, the conversion rate of ethylene per pass through the reactor was 26.7 %.

The continuous hourly production was reduced by increasing the preheater outlet temperature, lowering the peak temperature and adjusting the cooling water temperature of the reactor.

Example 2 (comparative, reactor 2 with higher conversion rate)

The polymerization of Example 1 was repeated. However, the conversion rate of ethylene per pass through was increased to 31.9%, obtaining within a period of 24 hours of continuous production 37.4 t/h of LDPE, having the properties summarized in Table 2.

The continuous hourly production was increased by decreasing the preheater outlet temperature, increasing the peak temperature and adjusting the cooling water temperature of the reactor.

Example 3 (comparative, reactor 1 with the low conversion rate of Example 1)

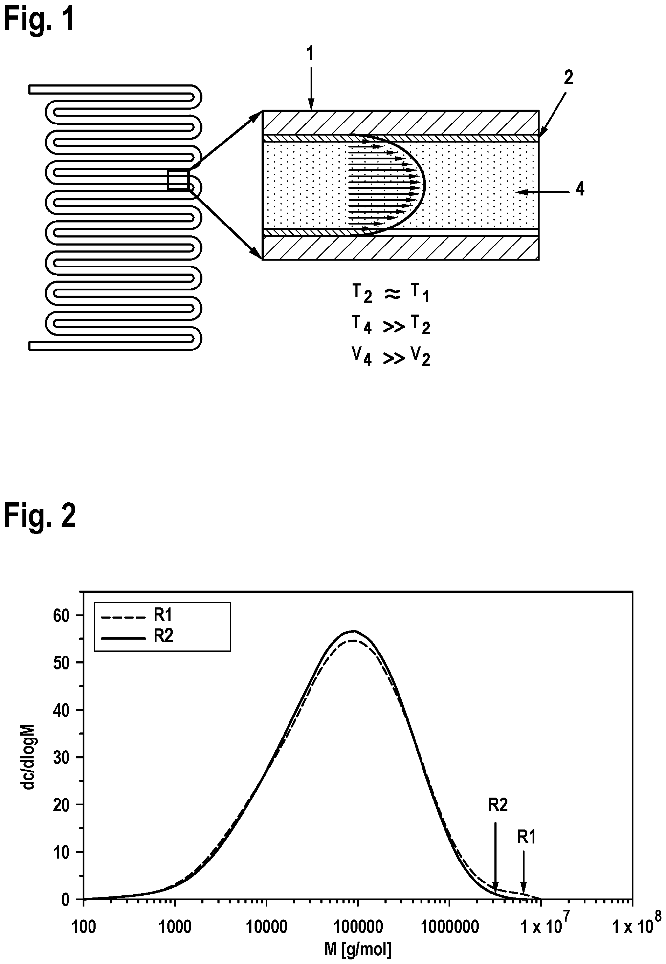

A film grade of LDPE of the same density and melt flow rate as the film grade LDPE prepared in Example 1 was produced by continuous polymerization of ethylene as ethylenically unsaturated monomer in a high-pressure tubular reactor of the design shown in Figure 1 having in total a length of 934 m and a design pressure of 300 MPa. The tubular reactor was composed of reactor tubes having a length of 10 m, an outer diameter do of 96 mm and an inner diameter of di of 40 mm, thus resulting in a volume to surface ratio V/A of 0.0100.

Propionic aldehyde was added as chain transfer agent to the fresh ethylene stream entering the primary compressor in an amount of 1.4 kg per t of produced polyethylene. The secondary compressor was operated with a throughput of 30 t reaction gas composition per hour.

The polymerization was carried out as described in Example 1. Within a period of 24 hours of continuous production, 8 t of LDPE were obtained having the properties summarized in Table 2. Accordingly, the conversion rate of ethylene per pass through the reactor was 26.7 %, the same as in Example 1.

Table 2. Results from Experiments 1 to 3

| | Example 1[a] | Example 2[b] (comparative) | Example 3[c] (comparative) |
|---|---|---|---|
| Density [g/cm$^3$] | 0.9245 | 0.9241 | 0.9237 |
| MFR$_{2.16}$ [g/10min] | 0.68 | 0.66 | 0.65 |
| Haze [%] | 6.1 | 7.4 | 6.7 |
| Gloss 20° | 74 | 37 | 47 |
| Gloss 60° | 113 | 90 | 98 |
| Clarity [%] | 98.3 | 95.0 | 96.0 |
| DDI [g] | 138 | 196 | 194 |
| Mn | 21602 | 19622 | 17068 |
| Mw (GPC/GPC_LS) | 84504/108783 | 106067/141715 | 94485/175230 |
| [a] average value from 6 runs. [b] average value from 13 runs. [a] average value from 7 runs. | | | |

It is assumed that the flow in a tubular LDPE reactor can be described as follows (Fig. 1): Fig. 1 shows a detailed view of a tube 1, comprising an edge layer 2, which is located adjacent to the inner walls of the reactor. The tube 1 further comprises a core layer 4, which is indicated with the dotted hashing. The temperature of the edge layer $T_2$ is about the same as the temperature of the tube wall $T_1$, wherein the temperature of the core layer $T_4$ is much higher than the temperature of the edge layer $T_2$. As is indicated in Fig.1, the velocity in the core layer $v_4$ is higher than the velocity in the

edge layer $v_2$. In the edge layer 2, a high molecular weight fraction is produced, which impacts the MWD of the final product. In smaller tubular reactors, the impact of this edge layer 2 to the MWD is much more pronounced, in comparison to larger reactors. This effect, is apparent from the data shown in Table 2. Figure 2 indicates the MWD of the LDPE produced in different tubular reactors: With increasing size of the tubular reactors, in combination with higher conversion rates, the MWD is narrowed due to the reduced amount of the high molecular weight fraction.

When comparing the optical properties of the product of example 1, which was conducted according to the disclosure, and comparative examples 2 and 3, it becomes apparent that the reactor 2 (R2) product has significantly better optical properties in comparison to product as produced in reactor 1 (R1) (e.g. in terms of haze), when operating reactor 2 at the same conversion rate as reactor 1. Therefore, the larger volume to surface ratio of reactor 2 enhances the optical properties when running the production at a similar conversion rate as reactor 1. Thus, the optical properties are improved, by selecting a specific reactor size and conversion rate.

**Claims**

1. A process for the preparation of ethylene homopolymers or copolymers in a facility,

   the facility comprising a high-pressure tubular reactor used in a continuous flow mode with a reaction fluid comprising or consisting of ethylene being introduced into the reactor at a reactor inlet and polymer leaving the reactor at a reactor outlet and the facility further comprising a preheater having an inlet and an outlet,
   wherein the process comprises the following steps:

   a) compressing the reaction fluid to an elevated pressure;
   b) heating at least a portion of the reaction fluid in the preheater;
   c) introducing the reaction fluid heated in step b) into the reactor at the reactor inlet; and
   d) polymerizing the reaction fluid at temperatures from 100°C to 350°C and pressures in the range from 180 MPa to 340 MPa in the presence of free-radical polymerization initiators in the reactor,

   wherein

   - the tubular reactor has a volume V [in m$^3$] and an inner surface area A [in m$^2$], and the ratio V/A is higher than 0.016,
   - the reactor is run at a monomer conversion in a range of from 22 to 31 %.

2. The process of claim 1, wherein the reactor has a volume to surface ratio in a range of from 0.019 to 0.022.

3. The process of claim 1 or claim 2, wherein the conversion rate is in a range of from 23 to 29, preferably in a range of from 24 to 28, in particular in a range of from 25 to 27.5, such as in a range of from 25.5 to 27, or in a range of from 26 to 27.

4. The process according to any of the preceding claims, wherein the tubular reactor has an inner diameter $d_i$ of from 65 to 120 mm, preferably from 70 mm to 110 mm.

5. The process according to any of the preceding claims, wherein the tubular reactor is composed of tubes of a length of from 5 m to 25 m.

6. The process according to any of the preceding claims, wherein the design pressure $p_{des}$ of the tubular reactor is from 240 MPa to 400 MPa.

7. The process according to any of the preceding claims, wherein the feed rate of the reaction gas composition to the tubular reactor is from 80 t/h to 210 t/h.

8. The process of any of the preceding claims, wherein step b) comprises addition of one or more chain-transfer agents,

   preferably wherein the chain transfer agent is selected from hydrogen, aliphatic and olefinic hydrocarbons, ketones, aldehydes and saturated aliphatic alcohols,
   more preferably wherein the chain-transfer agent is a saturated aliphatic aldehyde, 1-olefins or aliphatic hydrocarbons.

9.  The process of claim 8, wherein the amount of added aldehydes and ketones is in a range of from 0.4 kg/t of prepared polymer to 10 kg/t of prepared polymer.

10. The process according to claim 8 or claim 9, wherein propionic aldehyde is used as sole chain transfer agent or the chain transfer agent is a mixture of propionic aldehyde and one or more olefinic hydrocarbons.

11. The process of any of the preceding claims, wherein the average velocity of the reaction fluid at the outlet of the preheater is lower than the average velocity of the reaction fluid in the tubular reactor at the reactor inlet and the ratio of the average velocity of the reaction fluid in the tubular reactor at the reactor inlet to the average velocity of the reaction fluid in the preheater at the outlet of the preheater is in the range from 1.5 to 5.

12. The process of any of the preceding claims, wherein, in step a), the pressure of the reaction fluid after compression ranges from 180 MPa to 320 MPa, and/or, in step c), when introducing the heated reaction fluid into the reactor, the pressure of the reaction fluid ranges from 175 MPa to 315 MPa.

13. The process of any of the preceding claims, wherein, in step c), when introducing the heated reaction fluid into the reactor, the temperature of the reaction fluid ranges from 130°C to 180°C.

14. A low density polyethylene having:

    a) a density in a range of from 0.910 to 0.936 g/, determined according to ISO 1183-1 at 23°C;
    b) an Mw value in a range of from 70.000 to 100.000, where Mw is the weight average molecular weight, measured by GPC;
    c) an Mn value in a range of from 18.000 to 24.000, where Mn is the number average molar mass, measured by GPC;
    d) a gloss 20° value [as measured according to ASTM D 2457] of 74 or more;
    e) a gloss 60° value [as measured according to ASTM D 2457] of 114 or more;
    f) a haze value [as measured according to ASTM D 1003] of less than 6;
    g) a melt flow rate in a range of from 0.67 to 1.0 g/10, determined according to ISO 1133-1;
    h) a dart drop impact strength, F50, in a range of from 130 to 200 g, determined according to ASTM D1709;
    i) a clarity in a range of from 97.0 to 99.3.

Fig. 1

$T_2 \approx T_1$

$T_4 \gg T_2$

$V_4 \gg V_2$

Fig. 2

Europäisches
Patentamt

European
Patent Office

Office européen
des brevets

# EUROPEAN SEARCH REPORT

**Application Number**

EP 23 17 5771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 503 949 A (GASPARI RAFFAELE) 31 March 1970 (1970-03-31) * the whole document * ----- | 1-14 | INV. C08F2/01 C08F2/02 C08F10/02 |
| A | CHRISTIAN-ULRICH SCHMIDT ET AL: "Detailed Molecular Structure Modeling – A Path Forward to Designing Application Properties of ldPE", MACROMOLECULAR MATERIALS AND ENGINEERING., vol. 290, no. 4, 19 April 2005 (2005-04-19), pages 404-414, XP055226725, DE ISSN: 1438-7492, DOI: 10.1002/mame.200400342 * the whole document * ----- | 1-14 | |
| A | US 2021/324185 A1 (LI DONGMING [US] ET AL) 21 October 2021 (2021-10-21) * the whole document * ----- | 1-14 | |

| | | | TECHNICAL FIELDS SEARCHED (IPC) |
|---|---|---|---|
| | | | C08F |

The present search report has been drawn up for all claims

| Place of search | Date of completion of the search | Examiner |
|---|---|---|
| Munich | 7 November 2023 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 5771

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | | Publication date | Patent family member(s) | | Publication date |
|---|---|---|---|---|---|
| US 3503949 | A | 31-03-1970 | DE | 1645368 A1 | 23-07-1970 |
| | | | GB | 1147774 A | 10-04-1969 |
| | | | NL | 134444 C | 07-11-2023 |
| | | | NL | 6609653 A | 10-01-1967 |
| | | | US | 3503949 A | 31-03-1970 |
| US 2021324185 | A1 | 21-10-2021 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012044504 A1
- WO 2019034718 A1
- EP 3121199 A1
- WO 2020127079 A1

**Non-patent literature cited in the description**

- **BENOIT H.** ; **REMPP P.** ; **GRUBISIC Z.** *J. Polymer Sci., Phys. Ed.*, 1967, vol. 5, 753
- **ZIMM BH** ; **STOCKMAYER WH**. The dimensions of chain molecules containing branches and rings.. *J Chem Physics*, vol. 17
- **RUBINSTEIN M.** ; **COLBY RH**. Polymer Physics. Oxford University Press, 2003